# EUROPEAN PATENT SPECIFICATION

(11) **EP 0 461 583 B1**
(45) Date of publication and mention of the grant of the patent: **26.03.1997**
(21) Application number: 91109475.3
(22) Date of filing: 10.06.1991
(51) Int. Cl.: H04J 14/00

(54) **Optical transmission system and method**
Optisches Übertragungssystem und -verfahren
Système et procédé de transmission optique

(30) Priority: 12.06.1990 FI 902945
(43) Date of publication of application: 18.12.1991
(73) Proprietor: OY NOKIA AB, 00101 Helsinki (FI)
(72) Inventor: Saijonmaa, Jaakko, SF-02230 Espoo (FI); Mäenpää, Jarmo, SF-03400 Vihti (FI)
(74) Representative: Howden, Christopher Andrew

(56) References cited:
- EP-A- 0 389 062
- DE-A- 3 218 261
- US-A- 4 701 904

## Description

The invention relates to an optical transmission system and a method for transmitting signals from at least two different electrical transmission systems over a common fibre-optical transmission medium.

Optical fibres have long been used in the telephone networks for trunk lines between telephone exchanges and for long distance trunk lines in cable television systems, for instance. Traditionally, however, subscriber lines, such as internal networks in buildings and offices, have been realized by metal conductors and electric signals. Moreover, different services have usually been supplied to the subscriber through separate cables, which is mainly due to the completely different requirements set for cables by, e.g., telephone signals and cable television signals. The different noise and reliability requirements of the networks or systems make it difficult to integrate different signals and services in the same cable.

At present, optical fibres are being used more and more extensively also for subscriber lines, whereby the properties and transmission capacity of the fibre link itself would enable the integration of many interactive subscriber and distribution signals in the same fibre, which, in turn, would reduce the cost of the distribution network. One example of integrated services is the ISDN network. This, however, requires standardization and harmonization of all terminal equipments and, as a result, very high apparatus investments at least at the initial stage. The integration of the electric cable television, telephone and data transmission systems presently in use in the same optical transmission network causes problems as such since the electric properties and reliability of all terminal equipments have to be dimensioned in accordance with the most strictly specified service or system. This raises the price of the terminal and subscriber equipment of the other services. In addition, the different services usually have different operators, such as telephone companies and cable television companies with separate invoicing and other such systems, wherefore they are not willing to integrate services with other system operators.

US-A-4701904 discloses an optical communication system which permits a plurality of users to communicate with one another optically. Each user has a transceiver comprising a transmitter and a receiver and has optical couplers via which it can communicate with other users. One optical coupler of each user is arranged to couple optical information signals from its transmitter to a first optical fibre common to the users and another optical coupler of each user is arranged to couple information signals from another optical fibre to the user's receiver.

The object of the present invention is to provide an optical transmission system and method which avoid or alleviate the above-mentioned problems and provide a flexible and advantageous way of integrating signals of different electric transmission systems to the same optical transmission medium.

According to one aspect of the invention, there is provided a method of transmitting electric signals over an optical transmission medium, comprising the steps of:
obtaining electric signals from at least two different electric transmission services intended for reception by a plurality of subscribers on a pre-selected basis;
combining the electric signals of the different services electrically to a sum signal at a transmitting end;
converting the sum signal into an optical signal;
transmitting the optical signal to a receiving end over a fibre-optical transmission medium common to the different signals;
receiving the optical signal by a receiver at each subscriber; characterised by further steps of
dividing at each subscriber the optical signal to form separate optical signals corresponding to each of the pre-selected electric transmission service;
converting each of the separate optical signals into electric signals for processing in dedicated electrical receiving means for each transmission service; and
detecting each of the transmission service pre-selected for that particular subscriber.

According to another aspect of the invention, there is provided a system for transmitting electric signals over an optical transmission medium, comprising at a transmitting end:
means for combining electrical signals from at least two different electric transmission services intended for reception by a plurality of subscribers on a pre-selected basis;
an optical transmitter for converting the combined electrical signal into an optical signal and for transmitting the optical signal over a fibre-optical transmission medium to a receiving end;
characterised in that the system further comprises at the receiving end:
optical branching means at each subscriber for dividing the optical signal to form separate optical signals corresponding to each of the pre-selected electric transmission services;
dedicated electrical receiver means for each of the transmission services pre-selected for that particular subscriber;
optical receivers for converting each of the separate optical signals into electric signals for processing in said dedicated electrical receiving means.

The basic idea of the invention is thus to sum the different signals electrically at the transmitting end and to detect each signal type by a separate optical receiver at the receiving end. At the transmitting end, the electric summing is carried out by one and the same equipment for rather a great number of subscribers, so that the equipment can be realised with sufficiently high-quality electric properties and noise and reliability properties without any notable system costs. For system operators, the use of a common equipment at the transmitting end is not equally problematic than the use of a common equipment at the subscriber end. An advantage of electric summing over various optical summing methods is, e.g., that it does not require the provision of a separate optical transmitter at the transmitting end for each signal type nor the coupling of summing means to the optical signal path, which coupling means cause attenuation, thus restricting the number of branchings available in the actual optical network.

As each signal type has its own optical receiver at the receiving end and its own subsequent electric circuits, the reception equipment and the services of different systems can be kept completely separate from each other. In this way, the system operator is able to deal with a subscriber at the end of the optical transmission path similarly as in a completely separate network. Correspondingly, the subscriber purchases a separate receiving equipment for each service he desires, such as for a cable television or a telephone subscription, wherefore he will not have apparatus costs for services which he does not need, contrary to the case in which the optical signal would be detected by a single optical receiver and signals of different types would be separated electrically. The solution of the invention allows the subscriber to flexibly acquire a new service by purchasing a receiving equipment for this particular service; correspondingly, he can easily abandon a service he does not need.

As a whole, the arrangement of the invention is optimal in its flexibility, costs and interferences between signals of different types.

Branching of an optical signal at the receiving end for different optical receivers can also be performed asymmetrically so that a proportionally greater portion of the optical power is applied to the optical receiver of a signal having a wider bandwidth, which receiver is more critical in view of the dimensioning of the power budget of the network. In certain cases, this enables the addition of one more branching device in the optical transmission path as compared with a case in which the optical signal is divided symmetrically to the optical receivers.

The invention is also concerned with an optical transmission system according to claim 6.

The invention will now be described in greater detail with reference to the attached drawings, in which
Figure 1 is a block diagram of an optical transmission system according to the invention;
Figures 2 and 3 are block diagrams of alternative equipments for carrying out electric summing at the transmitting end;
Figure 4 is a graphical representation of the frequency spectra of subscriber and distribution signals;
Figure 5 is a block diagram of an alternative optical transmission system according to the invention in which the backward direction of an interactive subscriber signal is transmitted over the same optical transmission network; and
Figures 6A and 6B illustrate an electric summing signal when the summing is carried out by time-division multiplexing.

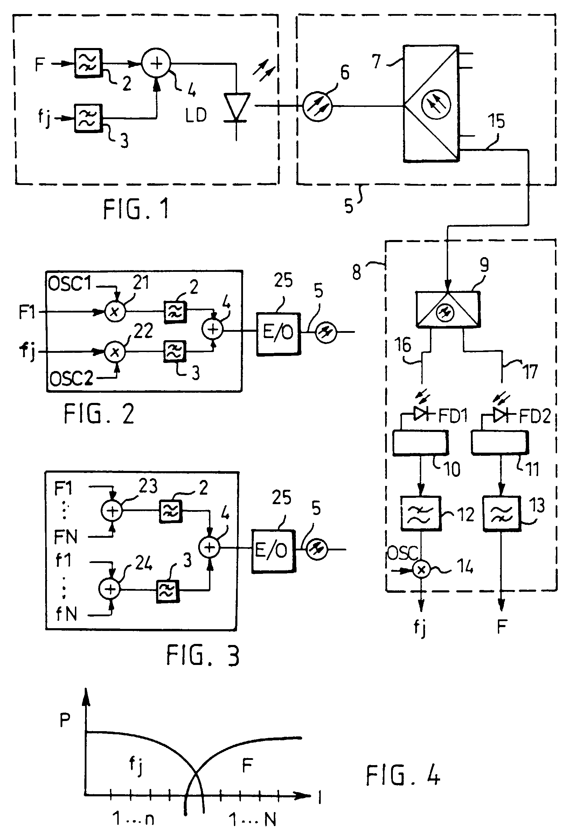

Figure 1 shows one fibre-optical transmission system according to the invention, in which signals of two or more types can be transmitted by multiplexing them electrically at the transmitting end and by receiving them by separate optical receivers at the receiving end. In the system illustrated, two signal types are transmitted, one of which is a general distribution signal, such as a cable television signal, which is transmitted possibly to several receiving ends in identical form, and the other is a signal specific for one subscriber or receiver, such as a telephone or data signal, which is transmitted to a predetermined receiver or subscriber. The distribution and subscriber signals may be analog or digital signals, and they may have been multiplexed with each other, e.g., on a frequency-division basis (FDM), time-division basis (TDM) or code-division basis (CDM). The distribution and subscriber signals may also be composed of several subsignals, which, in turn, may be FDM, TDM or CDM multiplexed with each other. The signals may also be FM or AM modulated analog signals or ASK modulated digital signals, which, in turn, may be composed of several FM, AM, FSK or ASK modulated signals. The signals may also be baseband signals. The subscriber signal may also be a so-called interactive signal, whereby it also comprises a backward direction from the receiving end to the transmitting end. This transmission of a backward signal may be realized by separate conductors or through the same optical network as a forward signal or a distribution signal. The backward signal may possibly also be composed of the control signal of the distribution signal. The invention, however, is not restricted to any particular signal type, but it can be applied to all signals utilized by systems integrated by means of the invention.

As shown in Figure 1, a distribution signal F is fed at the transmitting end through a highpass filter 2 and a subscriber signal fj correspondingly through a lowpass filter 3 to an electric summer 4 which generates an electric sum signal to be applied to an optical transmitter. In the case of Figure 1, the summer 4 performs electric summing on a frequency-division basis (FDM), whereby the subscriber signal fj and the distribution signal F are separated to their own frequency ranges by the filters 2 and 3 within the utilizable frequency band in such a way that the subscriber signal fj with a narrower band is within a lower frequency range and the distribution signal F requiring a wider frequency band is within a higher frequency range, as shown in Figure 4. Filtration carried out by the filters 2 and 3 before the electric summing of the signals fj and F decreases cross-talk between the higher and lower carrier frequency range and mutual interference between the carrier frequencies. The electric sum signal generated by the summer 4 is used for driving one or more electro-optical converters, such as a LED, a laser diode or the like, which converts the electric sum signal into an optical signal which is applied to a passive fibre-optical transmission network 5. The control of two or more electro-optical converters by the same electric sum signal enables fibre networks to be designed more flexibly in star, bus, tree and ring configurations or parallel fibre networks to be constructed to ensure the operation of the fibre network.

Figure 2 shows electric FDM summing when the distribution signal and the subscriber signal are both composed of a single signal F1 and f1, respectively, to be modulated. The signal F1 is mixed by a mixer 21 with an oscillator signal OSC1 to its carrier frequency and is applied through the highpass filter 2 to the summer 4. The subscriber signal f1 is mixed by another mixer 22 with an oscillator signal OSC2 to its carrier frequency and is applied through the lowpass filter 3 to the summer 4, which applies an electric sum signal to an electro-optical converter 25 and further as an optical signal to the optical fibre network 5.

Figure 3 illustrates electric FDM summing when the distribution signal F is composed of several subsignals F1 ... FN modulated to carriers common to all subscribers, and the subscriber signal fj is composed of several subsignals fl ... fN modulated to carriers specific for each particular subscriber. The subsignals f1 ... fN of the subscriber signal are first summed by a summer 24 and then fed through the lowpass filter 3 to the summer 4. The subsignals F1 ... FN of the distribution signal are first summed by a summer 23 and then fed through the highpass filter 2 to the summer 4. In Figure 3, it is assumed that the subsignals Fl ...FN and fl ...fN have been mixed in advance to desired carrier frequencies.

In the case of Figure 1, the passive fibre-optical network 5 between the transmitting end 1 and the receiving end 8 is of a tree configuration in which branching is realized by optical branching devices. In Figure 1, the reference numeral 6 indicates generally an optical fibre extending from the transmitting end 1, the reference numeral 7 indicates the branching of the network into n subscriber links or fibres 15, each one of which ends up in a corresponding subscriber equipment at the receiving end 8.

At the receiving end 8, the optical signal received from the subscriber fibre 15 is branched by a passive optical branching device 9 into two optical branches 16 and 17. The optical branch 17 feeds a part of the received optical signal to a photoreceiver 11 which comprises a photodiode FD1 as a light detecting means. Correspondingly, the optical branch 16 feeds part of the received optical signal to a photoreceiver 10 which comprises a photodiode FD2 as a light detecting means. The photoreceivers 10 and 11 form similar electric sum signals from the received optical signal. The electric output signal from the receiver 10 is filtered by a lowpass filter 12, whereby the subscriber signal fj is left over. Correspondingly, the electric output signal from the receiver 11 is filtered by a highpass filter 13, whereby the distribution signal F is left over. When the distribution signal or the subscriber signal is composed of one or more subsignals modulated to its own carrier, there may be provided at the receiving end 8 an electric oscillator OSC oscillating at the carrier frequency in question and a mixer 14 for mixing the subsignal to the carrier frequency.

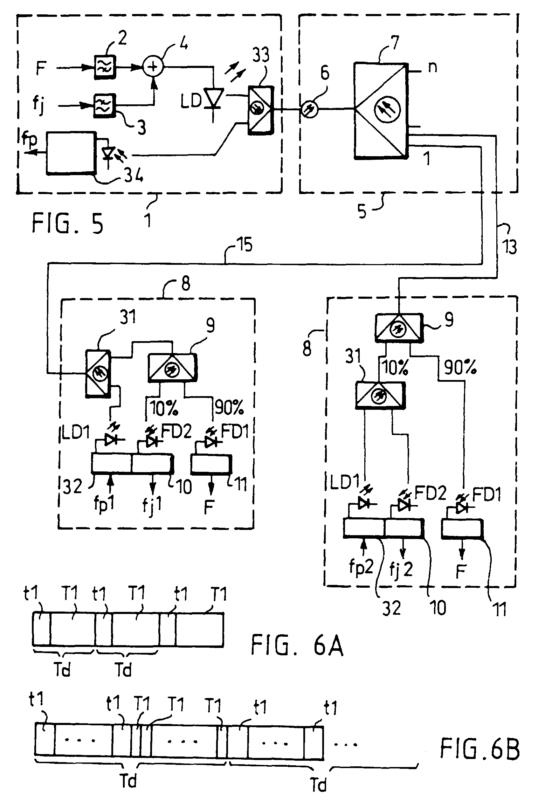

In place of frequency-division multiplexing, the electric summing (multiplexing) of signals of different types can also be performed e.g. by time-division multiplexing (TDM) or code-division multiplexing (CDM). In the electric summing of signals by time-division technique (TDM) one or more time slots correspond to each subsignal. Figure 6A illustrates the signal according to the invention when the distribution signal and the subscriber signal are both composed of a single subsignal, whereby they are correspondingly multiplexed to alternating time slots T1 and t1. Figure 6B illustrates a case in which the distribution signal and the subscriber signal are both composed of several subsignals, whereby the subscriber subsignals are multiplexed to the time slots t1 - tN and the distribution subsignals to the time slots T1 - TN. The electric filters 2, 3, 12 and 13 separating the higher and lower frequency ranges fj and F, shown in Figures 1 to 3, are thereby not needed because there exist no such frequency ranges in the time-division technique. The required electric bandwidth in the optical transmission network is determined by the transmission rate of the time-division signal. When using the TDM technique, the optical signal received at the receiving end is processed similarly as in connection with Figure 1. The electric equipment, however, is modified suitable for the multiplexing technique now used in a manner obvious to one skilled in the art. The time slot T of the distribution signal is now detected in the optical receiver 11 and converted into an electric output signal F. The time slot t of the subscriber signal is detected in the other receiver 10, and converted into an electric output signal fj. When the distribution or the subscriber signal consists of several subsignals, the time slot t1 ... tN or T1 ... TN of the desired subsignal can be detected and then converted into an electric output signal.

Figure 5 shows an alternative embodiment of the fibre-optical transmission system of the invention, in which the subscriber signal is an interactive signal containing a backward signal to be transmitted from the receiving end 8 to the transmitting end 1. In Figure 5, components and blocks having the same reference numeral as in Figure 1 indicate the same components or functions. As distinct from Figure 1, an optical transmitter LD at the transmitting end 1 is coupled to the optical fibre 6 of the network 5 through an optical branching device or wavelength multiplexer 33. An optical receiver 34 of the backward direction is coupled to one branch of the optical branching device or wavelength multiplexer 33. The optical receiver 34 receives and detects an optical backward signal from the receiving end 8 and forms an electric backward signal fp. Correspondingly, an optical transmitter 32 of the backward direction is provided at one or more receiving ends 8 for forming an optical backward signal from a corresponding electric backward signal fp1, and a passive optical branching device or wavelength multiplexer 31 for applying an optical backward signal to the optical transmission network 5. Figure 5 shows two possible locations for the branching device or wavelength multiplexer 31. In the right top corner of Figure 5, the branching device 31 is positioned between the subscriber fibre 15 and the optical branching device 9 dividing the optical signal to the receivers 10 and 11. One branch of the branching device 31 is thereby coupled to the branching device 9 and the other branch to the optical transmitter 31. Another alternative is shown in the right bottom corner of Figure 5, where the optical branching device or wavelength multiplexer 31 is coupled between the optical branching device 9 and the receiver 10 for the subscriber signal. One branch of the branching device 31 is thereby coupled to the optical receiver 10 and the other branch to the optical transmitter 32. This solution is advantageous when a signal to the optical receiver of the distribution signal of wider bandwidth is to be attenuated as little as possible.

In Figure 5, the optical branching device 9 is an asymmetrical branching device which divides a proportionally larger portion of the power of the optical signal to the receiver 11 of the signal of wider bandwidth. The asymmetry may be, e.g., such that 90% of the power is applied to the receiver 11 and 10% to the receiver 10. Since it is generally the minimum sufficient signal level at the receiver 11 that determines the maximum attenuation allowed for the network 5, the attenuation saved at the branching device 9 can be utilized by adding one more branching to the actual optical network. In this way, it has been possible to increase the number of subscribers in the preferred embodiment of the invention, for instance, from sixteen to thirty-two. When the branching devices 31 and 33 are wavelength multiplexers, they separate the distribution (forward) and backward directions optically, whereby the signals can be multiplexed independently of each other and the interactive signals of the backward direction can be multiplexed on a frequency- or time-division basis, as described above in the case of the distribution direction. In wavelength multiplexing, the distribution and backward direction signals use a different optical wavelength.

When the components 31 and 33 are optical branching devices, the backward direction can be realized similarly as in the case of wavelength multiplexing if possible backscattering in the optical branching devices and interfaces is not significant. If, however, the scattering is significant, it is advisable to multiplex the backward direction signal electrically to frequency ranges which are not in use in the distribution direction.

The optical branching device 33 of the receiving end 1 may also be asymmetric so that it attenuates the optical signal of the distribution direction to a lesser extent. This can be utilized in cases where the backward signal has a narrower bandwidth than the distribution direction signal. The backward and distribution direction signals may use the same or different wavelengths.

The figures and the description related to them are only intended to illustrate the present invention. In their details, the method and the system of the invention may vary within the scope of the attached claims.

The features disclosed in the foregoing description, in the following claims and/or in the accompanying drawings may, both separately and in any combination thereof, be material for realising the invention in diverse forms thereof.

## Claims

1. A method of transmitting electric signals over an optical transmission medium (6), comprising the steps of:
obtaining electric signals from at least two different electric transmission services intended for reception by a plurality of subscribers on a pre-selected basis;
combining the electric signals of the different services electrically to a sum signal at a transmitting end;
converting the sum signal into an optical signal;
transmitting the optical signal to a receiving end (8) over a fibre-optical transmission medium (6, 15) common to the different signals;
receiving the optical signal by a receiver (9) at each subscriber; characterised by further steps of
dividing (9) at each subscriber the optical signal to form separate optical signals (16, 17) corresponding to each of the pre-selected electric transmission service;
converting (10, 11) each of the separate optical signals (16, 17) into electric signals for processing in dedicated electrical receiving means for each transmission service; and
detecting (12, 13, 14) each of the transmission service pre-selected for that particular subscriber.

2. A method according to claim 1, characterised in that the at least two electric transmission services include broadcast services such as a radio and television, and telecommunication services, such as a telephone or data transmission.

3. A method according to claim 1 or 2, characterised by electrically combining the signals of the at least two electric transmission services at the transmitting end by frequency-division multiplexing, time-division multiplexing or code-division multiplexing.

4. A method according to any of the preceding claims, characterised by branching the optical signal at the receiving end asymmetrically in accordance with the bandwidth of the signals of the different electric transmission services by applying the highest optical power to the optical receiver of the electric transmission services having the widest bandwidth.

5. A system for transmitting electric signals over an optical transmission medium, comprising at a transmitting end (1):
means (4) for combining electrical signals (F, fj) from at least two different electric transmission services intended for reception by a plurality of subscribers on a pre-selected basis;
an optical transmitter (LD, 25) for converting the combined electrical signal into an optical signal and for transmitting the optical signal over a fibre-optical transmission medium (5) to a receiving end (8);
characterised in that the system further comprises at the receiving end (8):
optical branching means (9) at each subscriber for dividing the optical signal to form separate optical signals (16, 17) corresponding to each of the pre-selected electric transmission services;
dedicated electrical receiver means (12, 13, 14) for each of the transmission services pre-selected for that particular subscriber;
optical receivers (10, 11) for converting each of the separate optical signals (16, 17) into electric signals for processing in said dedicated electrical receiving means.

6. A system according to claim 5, characterised in that said optical branching device (9) is asymmetric for applying a higher proportion of the received optical signal to the optical receiver (11) of the electric transmission service having a wider bandwidth.

7. A system according to claim 5 or 6, characterised in that said combining means comprise frequency- time- or code-division multi-plexers.

8. A system according to claim 5, 6 or 7, characterised in that at least one of said electric transmission services is an interactive service, and that the receiving end (8) comprises an optical transmitting device (32, LD1) for transmitting a backward signal over the same optical transmission medium (5) to the transmitting end (1), and that said transmitting means (32, LD1) at the receiving end is coupled to the optical transmission medium (5) by comprising said optical passive branching device (9) and by a further passive branching device or a wavelength multiplexing device (31).

9. A system according to any of claims 6 to 8, characterised in that said fibre-optical transmission medium (5) is a passively branching fibre-optical network in a bus-, ring-, tree- or star-configuration.

## Patentansprüche

1. Verfahren zur Übertragung elektrischer Signale über ein optisches Übertragungsmedium (6) mit den Schritten:
Erhalten elektrischer Signale aus wenigstens zwei unterschiedlichen elektrischen Übertragungsdiensten, die für den Empfang durch eine Vielzahl von Teilnehmern auf einer vorgewählten Basis gedacht sind;
elektrisches Kombinieren der elektrischen Signale der unterschiedlichen Dienste zu einem Summensignal auf einer Senderseite;
Umwandeln des Summensignals in ein optisches Signal;
Übertragen des optischen Signals zu einer Empfängerseite (8) über ein faseroptisches Übertragungsmedium (6, 15), das den unterschiedlichen Signalen gemeinsam ist;
Empfangen des optischen Signals durch einen Empfänger (9) bei jedem Teilnehmer; gekennzeichnet durch weitere Schritte
Aufteilen (9) des optischen Signals bei jedem Teilnehmer, um getrennte optische Signale (16, 17) zu formen, die jedem der vorgewählten elektrischen Übertragungsdienste entsprechen;
Umwandeln (10, 11) jedes der getrennten optischen Signale (16, 17) in elektrische Signale zur Verarbeitung in dezidierten elektrischen Empfangseinrichtungen für jeden Übertragungsdienst; und
Detektieren (12, 13, 14) jedes der für diesen bestimmten Teilnehmer vorgewählten Übertragungsdienste.

2. Verfahren nach Anspruch 1, dadurch gekennzeichnet, daß die wenigstens zwei elektrischen Übertragungsdienste Rundfunkdienste wie Radio und Fernsehen und Telekommunikationsdienste wie Telefon oder Datenübertragung beinhalten.

3. Verfahren nach Anspruch 1 oder 2, gekennzeichnet durch elektrisches Kombinieren der Signale der wenigstens zwei elektrischen Übertragungsdienste auf der Senderseite durch Frequenzmultiplex, Zeitmultiplex oder Codemultiplex.

4. Verfahren nach jedem der vorangehenden Ansprüche, gekennzeichnet durch asymmetrisches Verzweigen des optischen Signals auf der Empfängerseite gemäß der Bandbreite der Signale der unterschiedlichen elektrischen Übertragungsdienste durch Anlegen der höchsten optischen Leistung an den optischen Empfänger der elektrischen Übertragungsdienste mit der größten Bandbreite.

5. System zur Übertragung elektrischer Signale über ein optisches Übertragungsmedium, auf einer Senderseite (1) mit:
Einrichtungen (4) zum Kombinieren elektrischer Signale (F, fj) aus wenigstens zwei unterschiedlichen elektrischen Übertragungsdiensten, die für den Empfang durch eine Vielzahl von Teilnehmern auf einer vorgewählten Basis gedacht sind;
einen optischen Sender (LD, 25) zum Umwandeln des kombinierten elektrischen Signals in ein optisches Signal und zum Übertragen des optischen Signals über ein faseroptisches Übertragungsmedium (5) an eine Empfängerseite (8);
dadurch gekennzeichnet, daß das System auf der Empfängerseite (8) weiter umfaßt:
optische Verzweigungseinrichtungen (9) bei jedem Teilnehmer zum Aufteilen des optischen Signals, um getrennte optische Signale (16, 17) zu formen, die jedem der vorgewählten elektrischen Übertragungsdienste entsprechen;
dezidierte elektrische Empfängereinrichtungen (12, 13, 14) für jeden der für diesen bestimmten Teilnehmer vorgewählten Übertragungsdienste;
optische Empfänger (10, 11) zum Umwandeln jedes der getrennten optischen Signale (16, 17) in elektrische Signale zur Verarbeitung in den dezidierten elektrischen Empfangseinrichtungen.

6. System nach Anspruch 5, dadurch gekennzeichnet, daß die optische Verzweigungseinrichtung (9) asymmetrisch ist, um einen höheren Anteil des empfangenen optischen Signals an den optischen Empfänger (11) des elektrischen Übertragungsdiensts mit größerer Bandbreite anzulegen.

7. System nach Anspruch 5 oder 6, dadurch gekennzeichnet, daß die Kombiniereinrichtungen Frequenz-, Zeit- oder Codemultiplexer beinhalten.

8. System nach Anspruch 5, 6 oder 7, dadurch gekennzeichnet, daß wenigstens einer der elektrischen Übertragungsdienste ein interaktiver Dienst ist und daß die Empfängerseite (8) eine optische Übertragungsvorrichtung (32, LD1) zum Übertragen eines Rücksignals über dasselbe optische Übertragungsmedium an die Senderseite (1) beinhaltet und daß die Übertragungseinrichtung (32, LD1) auf der Empfängerseite durch Beinhalten der passiven optischen Verzweigungsvorrichtung (9) und durch eine weitere passive Verzweigungsvorrichtung oder eine Wellenlängenmultiplexervorrichtung (31) an das optische Übertragungsmedium (5) gekoppelt ist.

9. System nach jedem der Ansprüche 6 bis 8, dadurch gekennzeichnet, daß das faseroptische Übertragungsmedium (5) ein passiv verzweigendes faseroptisches Netz mit einem Bus-, Ring-, Baum- oder Sternaufbau ist.

## Revendications

1. Procédé de transmission de signaux électriques dans un milieu de transmission optique (6), comprenant les étapes consistant à :
obtenir des signaux électriques provenant d'au moins deux services différents de transmission électriques, destinés à être reçus par une pluralité d'abonnés, sur une base présélectionnée;
combiner électriquement les signaux électriques des différents services pour former un signal somme à une extrémité d'émission;
convertir le signal somme en un signal optique;
envoyer le signal optique à une extrémité de réception (8) par l'intermédiaire d'un milieu de transmission à fibre optique (6,15) commun aux différents signaux;
recevoir le signal optique au moyen d'un récepteur (9) chez chaque abonné;
caractérisé par les étapes supplémentaires consistant à :
diviser (9), chez chaque abonné, le signal optique de manière à former des signaux optiques séparés (16,17) correspondant à chacun des services électriques présélectionnés de transmission;
convertir (10,11) chacun des signaux optiques séparés (16,17) en des signaux électriques pour leur traitement dans les moyens de réception électriques spécialisés, pour chaque service de transmission; et
détecter (12,13,14) chacun des services de transmission présélectionnés pour cet abonné particulier.

2. Procédé selon la revendication 1, caractérisé en ce que les au moins deux services de transmission électriques comprennent des services de diffusion, tels que la radio et la télévision, et des services de télécommunications, tel qu'un téléphone ou une transmission de données.

3. Procédé selon la revendication 1 ou 2, caractérisé par la combinaison électrique des signaux des au moins deux services de transmission électriques sur l'extrémité émission par multiplexage à division de fréquence, multiplexage à division du temps ou multiplexage à division de code.

4. Procédé selon l'une quelconque des revendications précédentes, caractérisé par la dérivation du signal optique au niveau de l'extrémité de réception, d'une manière dissymétrique en fonction de la largeur de bande des signaux dans les différents systèmes de transmission électriques, par application de la puissance optique maximale au récepteur optique des services de transmission électrique présentant la largeur de bande la plus grande.

5. Système pour la transmission de signaux électriques dans un milieu de transmission optique, comprenant à une extrémité d'émission (1) :
des moyens (4) pour combiner des signaux électriques (F, fj) provenant d'au moins deux services différents de transmission électrique et destinés à la réception pour une pluralité d'abonnés, sur une base présélectionnée;
un émetteur optique (LD, 25) pour convertir le signal électrique combiné en un signal optique et pour transmettre le signal optique dans un milieu de transmission à fibre optique (5) jusqu'à une extrémité de réception (8);
caractérisé en ce que le système comporte en outre, au niveau de l'extrémité de réception (8) :
des moyens de dérivation optique (9) prévus chez chaque abonné pour diviser le signal optique de manière à former des signaux optiques séparés (16,17) correspondant à chacun des services présélectionnés de transmission électrique;
ces moyens formant récepteur électrique spécialisés (12,13,14) pour chacun des services de transmission présélectionnés pour cet abonné particulier;
des récepteurs optiques (10,11) pour convertir chacun des signaux optiques séparés (16,17) en des signaux électriques pour leur traitement dans lesdits moyens spécialisés de réception électrique.

6. Système selon la revendication 5, caractérisé en ce que ledit dispositif de dérivation optique (9) est dissymétrique pour permettre l'application d'une proportion plus grande du signal optique reçu au récepteur optique (11) du service de transmission électrique possédant une largeur de bande plus étendue.

7. Système selon la revendication 5 ou 6, caractérisé en ce que lesdits moyens combinatoires comprennent des multiplexeurs à division de fréquence - de temps - ou de code.

8. Système selon la revendication 5, 6 ou 7, caractérisé en ce que le au moins un desdits services de transmission électrique est un service interactif et que l'extrémité de réception (8) comprend un dispositif d'émission optique (32, LD1) pour transmettre un signal de retour dans le même milieu de transmission optique (5) à l'extrémité d'émission (1), et que lesdits moyens d'émission (32, LD1) dans l'extrémité de réception sont couplés au milieu de transmission optique (5) par le fait qu'ils comprennent ledit dispositif de dérivation optique passif (9) et par le fait qu'il est prévu un autre dispositif passif de dérivation ou un dispositif (31) de multiplexage des longueurs d'onde.

9. Système selon l'une quelconque des revendications 6 à 8, caractérisé en ce que ledit milieu de transmission à fibre optique (5) est un réseau à fibre optique réalisant une dérivation passive et agencé avec une configuration de bus, d'anneau, d'arbre ou d'étoile.
